# EUROPÄISCHE PATENTSCHRIFT

(11) **EP 2 673 389 B1**
(45) Veröffentlichungstag und Bekanntmachung des Hinweises auf die Patenterteilung: **30.12.2015**
(21) Anmeldenummer: 12700998.3
(22) Anmeldetag: 25.01.2012
(51) Int. Cl.: C22C 1/02, C22C 1/04, C22C 21/00, F16C 17/00

(54) **GLEITLAGERVERBUNDWERKSTOFF**
SLIDING BEARING COMPOSITE
MATÉRIAU COMPOSITE POUR PALIERS LISSES

(30) Priorität: 08.02.2011 DE 102011003797
(43) Veröffentlichungstag der Anmeldung: 18.12.2013
(73) Patentinhaber: Federal-Mogul Wiesbaden GmbH, 65201 Wiesbaden (DE)
(72) Erfinder: ANDLER, Gerd, 65307 Bad Schwalbach (DE); LINDNER, Karl-Heinz, 45481 Mülheim (DE)
(74) Vertreter: Mehler Achler
(86) Internationale Anmeldenummer: PCT/EP2012/051124
(87) Internationale Veröffentlichungsnummer: WO 2012/107288

(56) Entgegenhaltungen:
- EP-A1- 0 131 428
- WO-A1-2008/003965

## Beschreibung

Die Erfindung betrifft einen Gleitlagerverbundwerkstoff mit einer Trägerschicht aus Stahl, einer auf der Trägerschicht angeordneten Zwischenschicht und einer auf der Zwischenschicht angeordneten Lagermetallschicht aus einer bis auf Verunreinigung bleifreien Aluminiumlegierung.

Derartige Gleitlagerverbundwerkstoffe werden insbesondere für Lagerschalen oder Buchsen für den Einsatz in Verbrennungsmotoren von Kraftfahrzeugen entwickelt. Neben solchen Verbundwerkstoffen mit einer Lagermetallschicht aus einer Aluminiumlegierung kommen hierfür ansonsten Kupfer bzw. Kupfer-Zinnbasierte Lagermetalllegierungen zum Einsatz, vgl. DE 10 2005 023 308 A1. Obgleich man lange Zeit davon ausgegangen war, dass im Hinblick auf die Anpassungsfähigkeit, Ermüdungsfestigkeit und das Fressverhalten die Kupferbasierten Legierungen den Aluminiumlegierungen überlegen sind, wurden in jüngster Vergangenheit verstärkt Anstrengungen unternommen, auch Aluminium-basierte Lagermetallwerkstoffe den gestiegenen Anforderungen moderner Verbrennungsmotoren anzupassen. Aluminiumwerkstoffe haben den Vorteil der Gewichtsersparnis und sind vergleichsweise kostengünstig, weshalb sie bei gleicher Leistungsfähigkeit zu bevorzugen sind.

Gleitlagerverbundwerkstoffe mit einer Lagermetallschicht auf Aluminiumbasis sind beispielsweise aus den Patentschriften DE 102 46 848 B4, DE 43 23 448 C5 oder aus den Offenlegungsschriften GB 2 243 418 A, WO 02/40883 A1, EP 0 131 428 A1 und DE 10 2010 029 158 A1 bekannt.

In den beiden Schriften DE 43 23 448 C5 und WO 02/40883 A1 ist Blei als Festschmierstoff zur Verringerung der Fressneigung obligatorisch. Aus Umweltgründen sind bleihaltige Legierungen aber zu vermeiden. Der aus den Schriften DE 102 46 848 B4 und DE 10 2010 029 158 A1 bekannte Werkstoff ist bleifrei, wobei in der DE 10 2010 029 158 A1 nur ganz allgemein von einer nicht näher spezifizierten Aluminiumlegierung die Rede ist. Die EP 0 131 428 A1 und die DE 102 46 848 B4 sind diesbezüglich detaillierter und bilden daher den im Hinblick auf die vorliegende Erfindung gattungsgemäßen Stand der Technik.

Die aus der Schrift EP 0 131 428 A1 bekannte Aluminiumlegierung umfasst 1 bis 11 Gew.-% Silizium, 8 bis 35 Gew.-% Zinn und 0,2 bis 3 Gew.-% Kupfer. Ein bevorzugtes Ausführungsbeispiel umfasst 4 Gew.-% Silizium, 10 Gew.-% Zinn und 1 Gew.-% Kupfer. Im Übrigen besteht die Legierung aus Aluminium. Der Schwerpunkt der Untersuchung in dieser Schrift liegt auf der Entwicklung eines Materials, welches im Zusammenwirken mit einem Gegenläufer aus geschmiedetem Stahl und Gusseisen ohne elektroplattierten Überzug eine höhere Ermüdungsfestigkeit und eine geringere Fressneigung aufweist.

Die aus der Schrift DE 102 46 848 B4 bekannte Aluminiumlagerlegierung umfasst 1,5 bis 8 Gew.-% Si, 3 bis 40 Gew.-% Sn, ein oder mehrere Elemente aus der Gruppe, bestehend aus Cu, Zn und Mg in einer Gesamtmenge von 0,1 bis 6 Gew.-%, optional ein oder mehrere Elemente aus der Gruppe, bestehend aus Mn, V, Mo, Cr, Ni, Co und B, in einer Gesamtmenge von 0,01 bis 3 Gew.-% und im übrigen Aluminium. Der Schwerpunkt der Untersuchung in jener Schrift liegt auf der Partikelgrößenverteilung der in dem fertigen Aluminiumlagerlegierungsprodukt enthaltenen Si-Partikel, welche sowohl einen Anteil kleiner Si-Partikel mit einer Korngröße von weniger als 4 µm als auch größere Si-Partikel mit einer Korngröße von 4 bis 20 µm in einer bestimmten, jedoch sehr breiten Verteilung enthalten soll. Mit der angegebenen Verteilung soll die Neigung des Werkstoffes mit dem Gleitpartner zu verkleben (Fressneigung) vermindert und die Einbindung der Partikel in den Werkstoff verbessert werden. Zum Erreichen der geforderten Partikelgrößenverteilung trägt nach der Lehre jener Schrift die Abfolge eines Glühschritts bei einer Temperatur von 350°C bis 450°C über einen Zeitraum von 8 bis 24 Stunden und ein nachfolgender Walzschritt bei.

Demgegenüber befasst sich die vorliegende Erfindung mit der Optimierung der chemischen Zusammensetzung der Aluminium-basierten Lagermetallschicht im Hinblick auf eine kostengünstige Materialauswahl bei gleichzeitiger Optimierung der mechanischen Eigenschaften Festigkeit, Verschleißbeständigkeit, Umformbarkeit und Reibwiderstand. Die Umformbarkeit soll im Hinblick auf die herstellungsbedingten hohen Umformgrade beim Walzen der Gleitlagerverbundwerkstoffe optimiert werden. Moderne Motoren verlangen aufgrund höherer spezifischer Leistung gleichzeitig mehr Festigkeit, insbesondere Warmfestigkeit, unter geringstmöglichem Materialaufwand. Auch die Verschleißbeständigkeit unterliegt dabei einem ständigen Optimierungsbestreben und soll nicht der steigenden Leistungsanforderung geopfert werden, da mit zunehmendem Verschleiß abgesehen von einer potentiellen Ausfallgefahr auch die Effizienz und damit die Sparsamkeit des Motor abzunehmen droht. Ebenfalls im Hinblick auf die Sparsamkeit des Motors herrschen in den Lagern moderner Verbrennungsmotoren zunehmend Mischreibungsbedingungen vor, die einerseits der Verwendung von Ölen mit niedriger Viskosität und andererseits in zunehmendem Maße der Nachfrage nach Start-Stopp-Anwendungen geschuldet sind. Anders gesagt, soll ein modernes Lager schon bei geringsten Drehzahlen einen möglichst geringen Reibkoeffizienten haben. Es wird nicht verkannt, dass die Partikelgrößenverteilung eine entscheidende Einflussgröße in dieser Hinsicht darstellt.

Vor diesem Hintergrund ist es Aufgabe der vorliegenden Erfindung, einen Gleitlagerverbundwerkstoff mit verbesserter Zusammensetzung im Hinblick auf ein hohes Maß an Umformbarkeit bei gleichzeitiger Steigerung der Warmfestigkeit und auf eine hohe Verschleißbeständigkeit, insbesondere unter den in Start-Stopp-Anwendungen vorherrschenden Mischreibungsbedingungen, unter geringstmöglichem Materialaufwand bereitzustellen.

Die Aufgabe wird gelöst durch einen Gleitlagerverbundwerkstoff mit den Merkmalen des Patentanspruchs 1.

Der erfindungsgemäße Gleitlagerverbundwerkstoff weist eine Trägerschicht aus Stahl und eine Lagermetallschicht aus einer bis auf Verunreinigung bleifreien Aluminiumlegierung auf, wobei die Aluminiumlegierung aus
10,5 - 14 Gew.-% Zinn,
2 - 3,5 Gew.-% Silizium,
0,4 - 0,6 Gew.-% Kupfer,
0,15 - 0,25 Gew.-% Chrom,
0,01 - 0,08 Gew.-% Strontium,
0,05 - 0,25 Gew.-% Titan
und wahlweise mindestens einem weiteren Element aus der Gruppe bestehend aus V und Zr, wobei deren Anteil insgesamt 0,05 bis 0,7 Gew.-% beträgt, besteht.

Die Erfinder haben erkannt, dass es gerade im Bereich von Mischreibungsbedingungen im Start-Stopp-Betrieb, d. h. wenn keine (hydrodynamische) Ölschmierung des Lagers gegeben ist, in zunehmendem Maße auf die exakte Zusammensetzung der Lagermetalllegierung ankommt. Dabei spielen auch die Verhältnisse der in sehr geringen Anteilen zugesetzten Elemente eine entscheidende Rolle.

Die Zugabe von Ti verbessert, ungeachtet einer geeigneten Temperaturführung und geeigneter Umformgrade bei der Herstellung des Gleitlagerverbundwerkstoffes, die Kornfeinung des Matrixmaterials beim Gießprozess. Durch eine exakte Einhaltung des Ti-Gehalts von 0,05 - 0,25 Gew.-%, bevorzugt 0,05 - 0,15 Gew.-%, kann bei den im Hinblick auf die Si-Partikelgrößenverteilung angestrebten geringen Abkühlraten des Gießprozesses eine hinreichend feine Korngröße des Al-Matrixmaterials eingestellt werden, die eine hohe Festigkeit bei guten Dehneigenschaften des Matrixwerkstoffes sicherstellt. Die Korngrößenverteilung des Matrixmaterials hat wiederum sowohl Einfluss auf die Verteilung der Si-Partikel, da sich das Si in der Al-Matrix löst, als auch auf die Einlagerung der Weichphase, d.h. des unlöslichen Sn entlang der Korngrenzen. Deshalb bedingt der Ti-Gehalt eine möglichst exakte Abstimmung mit dem Anteil des Si und des Sn.

Letzteres liegt erfindungsgemäß in einem Bereich von 10,5 Gew.-% bis 14 Gew.-%, bevorzugt 11 Gew.-% bis 13 Gew.-%, vor. Genau in diesem Bereich weist das Legierungssystem die hervorragenden Gleiteigenschaften auf, die einen Einsatz bei Mischreibungsbedingungen möglich macht, ohne bereits dessen Festigkeit zu beeinträchtigen.

Der Si-Gehalt ist mit einer Obergrenze von 3,5 Gew.-%, bevorzugt 2,75 Gew.-%, erfindungsgemäß so niedrig eingestellt, dass die im Hinblick auf die hohen Umformgraden der Walzschritte geforderte Duktilität gegeben ist. Auf der anderen Seite ist ein Mindestgehalt der Si-Partikel von 2 Gew.-%, bevorzugt 2,25 Gew.-%, notwendig, um eine hinreichende Verschleißbeständigkeit des Lagermetallwerkstoffes einstellen zu können.

Für die Verschleißbeständigkeit ist neben dem Si-Anteil auch die Partikelgrößenverteilung des Si maßgeblich, die wiederum durch die chemische Zusammensetzung beeinflusst wird. Die Erfinder haben erkannt, dass die gezielte Zugabe einer geringen Menge Sr im Bereich von 0,03 bis 0,08 Gew.-% bei dem oben genannten Si-Gehalt die Einstellbarkeit der Partikelgrößenverteilung begünstigt. Zusammen mit einer geringen Abkühlrate nach dem Gießprozess von < 75 K/sec, bevorzugt < 50 K/sec, sorgt das Sr im Hinblick auf eine Verschleißminimierung für eine optimierte Partikelgrößenverteilung. Gleichzeitig beeinflusst es die Form der Si-Partikel, welche in Folge des Sr-Gehalts nach dem Gießen im Mittel eine gefeintere Erscheinungsform aufweisen als dies ohne die Zugabe von Sr beobachtet werden konnte. Auf diese Weise verschlechtert sich im Hinblick auf die Folgearbeitsschritte Wärmebehandeln und Walzen die Umformbarkeit des Matrixwerkstoffs durch die Zugabe des Si nicht wesentlich. Der Sr-Gehalt ist insoweit exakt abgestimmt auf den Si-Gehalt.

Den Cr-Gehalt muss man im Zusammenhang mit dem Cu-Gehalt betrachten. Beide Elemente haben sich in der Aluminiummatrix als besonders wichtig im Hinblick auf die Warmfestigkeit des Werkstoffes herausgestellt. Diese ist bei hochbelasteten Anwendungen stets gefordert. Der Cr-Gehalt von 0,15 bis 0,25 Gew.-% hat sich bei gleichzeitiger Zulegierung von Cu mit einem Gehalt von 0,4 bis 0,6 Gew.-% als günstig erwiesen, um in der Matrix ausreichend festigkeitssteigernde Ausscheidungen zu bilden. Andererseits sollte ein Gehalt von 0,25 Gew.-% Cr und 0,6 Gew.-% Cu nicht überschritten werden, um wiederum die Umformbarkeit nicht negativ zu beeinflussen. Schließlich wirkt sich die Kombination aus Cr und Cu auch dahingehend positiv aus, dass eine Obergrenze des eingesetzten Cu von 0,6 Gew.-% die Kosten senkt und die Recyclingfähigkeit des Materials erhöht.

Als "bis auf Verunreinigungen bleifrei" wird im Sinne dieser Schrift verstanden, dass ein Bleianteil, der gegebenenfalls durch Verunreinigung einzelner Legierungselemente vorhanden sein könnte, jedenfalls einen Anteil von 0,1 Gew.-% nicht überschreiten darf.

Gemäß einer vorteilhaften Weiterbildung der Erfindung weist die Aluminiumlegierung der Lagermetallschicht mindestens ein weiteres Element aus der Gruppe bestehend aus V und Zr auf, wobei deren Anteil insgesamt 0,05 bis 0,7 Gew.-% beträgt.

Beide Elemente dienen der Erhöhung der Warmfestigkeit. V wirkt dabei hemmend auf die Rekristallisation des Matrixmaterials, was im Zusammenspiel mit dem Ti die Einstellung einer auf die Weichphase und das Si abgestimmten Korngröße erlaubt.

Zwischen der Lagermetallschicht und der Trägerschicht ist erfindungsgemäß eine Zwischenschicht angeordnet.

Die Zwischenschicht bewirkt eine höhere Bindungsfestigkeit der Lagermetallschicht auf der Stahl-Trägerschicht, da diese speziell im Hinblick auf die Eigenschaft der Bindungsfestigkeit optimiert werden kann und nicht die Eigenschaften einer Lagermetallschicht aufweisen muss. Hierfür kommen bevorzugt entweder Reinaluminium oder eine Aluminiumlegierung zum Einsatz. Vorzugsweise werden die Zwischenschicht und die Lagermetallschicht in einem Walzverfahren vorplattiert und der Schichtverbund anschließend in einem weiteren Walzverfahren auf die Stahl-Trägerschicht aufgetragen.

Vorteilhaft, insbesondere bei besonders hoch beanspruchten Lageranwendungen in Verbrennungsmotoren, ist auf der Lagermetallschicht eine Deckschicht auf Polymerbasis angeordnet.

Die Polymerschicht führt dazu, dass, insbesondere bei hohen Lasten, eine gleichmäßigere Lastverteilung über die gesamte Lagerbreite erfolgt. Durch die elastische und plastische Anpassungsfähigkeit der Polymerschicht kann hierdurch die Betriebssicherheit des gesamten Lagers nochmals gesteigert werden.

Bevorzugt liegt das Silizium in Form von Partikeln in der Lagermetallschicht der Gestalt verteilt vor, dass bezogen auf eine Fläche der Lagermetallschicht der Flächenanteil der in dieser Fläche sichtbaren Siliziumpartikel mit einem Durchmesser von 4 µm bis 8 µm wenigstens 2,5%, bevorzugt wenigstens 2,75% beträgt.

Diese Partikelgrößenverteilung hat sich als besonders vorteilhaft herausgestellt, weil die Si-Hartteilchen ausreichend groß sind, um als harte Tragkristalle eine hohe Verschleißbeständigkeit des Werkstoffes zu gewährleisten, andererseits wiederum nicht so groß, dass sie zu einer Reduzierung der Festigkeit der Matrix, insbesondere unter dynamischer Beanspruchung, führen. Die Erfinder haben einen Vergleichsversuch auf einem speziell entwickelten Prüfstand durchgeführt, in dem Kurbelwellenlager mit dem erfindungsgemäßen Gleitlagerverbundwerkstoff und zwei Vergleichs-Lagerwerkstoffen gegenübergestellt wurden. Zum Vergleich wurden ein Si-freier AlSnCuMn-Lagermetallwerkstoff und ein AlSnSiCuCrMn-Lagermetallwerkstoff herangezogen. Ersterer wurde bei der bevorzugten Abkühlrate von < 75 K/s, letzterer ohne die Zugabe von Sr bei einer vergleichsweise hohen Abkühlrate von > 400 K/s gegossen und weist im Ergebnis deutlich feinere Si-Partikel auf. Der Verschleiß des Si-freien Lagermetallwerkstoffes in 15000 Start-Stopp-Zyklen des Prüfstands fiel mit 158 µm erwartungsgemäß hoch aus. Überraschend war hingegen, dass auch der AlSnSiCuCrMn-Lagermetallwerkstoff trotz eines vergleichsweise hohen Si-Anteils einem inakzeptabel hohen Verschleiß von 86 µm unterlag, während die Lagermetallschicht des erfindungsgemäßen Gleitlagers verschleißbedingt nur um 9 µm abnahm.

Zur Ermittlung der Partikelgrößenverteilung wird ein Flächenausschnitt der Lagermetallschicht einer bestimmen Abmessung unter einem Mikroskop vorzugsweise bei 500-facher Vergrößerung betrachtet. Die Lagermetallschicht kann dabei in einer beliebigen Ebene betrachtet werden, da von einer im Wesentlichen homogenen Verteilung der Si-Partikel in der Schicht ausgegangen wird oder zumindest davon, dass eine Verteilung, die gewollt oder ungewollt inhomogen ist, also beispielsweise in einer Richtung graduell zu- oder abnimmt, jedenfalls die beanspruchten Grenzen nicht verlässt. Die Lagermetallschicht wird dazu vorzugsweise der Gestalt präpariert, dass zunächst ein ebener Schliff angefertigt wird. Die in dem Flächenausschnitt sichtbaren Si-Partikel werden der Gestalt vermessen, dass deren längste erkennbare Ausdehnung ermittelt wird. Die Fläche eines Kreises mit entsprechendem Durchmesser wird als Flächenäquivalent für das Partikel registriert. Schließlich werden die Flächen aller Si-Partikel in dem Flächenausschnitt mit einem Durchmesser zwischen 4 µm und 8 µm aufaddiert und auf die Gesamtmessfläche des untersuchten Flächenausschnitts normiert. Es können auch die Si-Partikel zunächst nach deren Durchmesser in Klassen eingeteilt und die Anzahl der Si-Partikel in jeder Klasse mit der der Klasse zugeordneten gemittelten Flächen multipliziert und danach die Produkte aller Klassen von Si-Partikel in dem Flächenausschnitt mit einem Durchmesser zwischen 4 µm und 8 µm aufaddiert werden. Das Ergebnis wird bei ausreichender Statistik nicht wesentlich abweichen.

Weitere Merkmale und Vorteile der Erfindung werden nachfolgend anhand von Ausführungsbeispielen und den Zeichnungen erläutert. Es zeigen:
- Figur 1: einen prinzipiellen Schichtaufbau eines ersten Ausführungsbeispiels des erfindungsgemäßen Gleitlagerverbundwerkstoffes;
- Figur 2: einen prinzipiellen Schichtaufbau eines zweiten Ausführungsbeispiels des erfindungsgemäßen Gleitlagerverbundwerkstoffes;
- Figur 3: eine Illustration der Bestimmung der Si-Partikelgrößenverteilung und
- Figur 4: ein Diagramm der Partikelgrößenverteilung der Si-Partikel in der Lagermetallschicht des Gleitlagerverbundwerkstoffes.

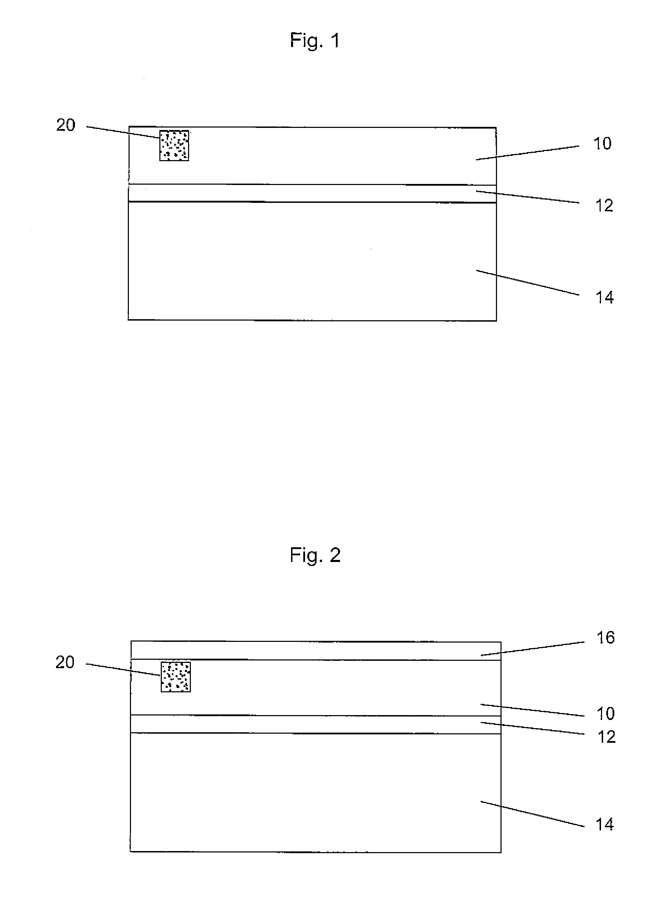

Figur 1 zeigt schematisch einen Querschnitt durch einen Gleitlagerverbundwerkstoff gemäß einem ersten Ausführungsbeispiel der Erfindung. Er weist insgesamt 3 Schichten auf. Als oberste Schicht ist in Figur 1 eine Lagermetallschicht 10 dargestellt, die die anspruchsgemäße Zusammensetzung auf Al-Basis aufweist. Die Lagermetallschicht 10 ist über eine Zwischenschicht 12 auf einer Stütz- oder Trägerschicht 14 aus Stahl aufgebracht. Die Zwischenschicht dient als Haftvermittler zwischen der Lagermetallschicht 10 und der Stahlschicht. Sie besteht typischerweise aus Reinaluminium oder eine Aluminiumlegierung.

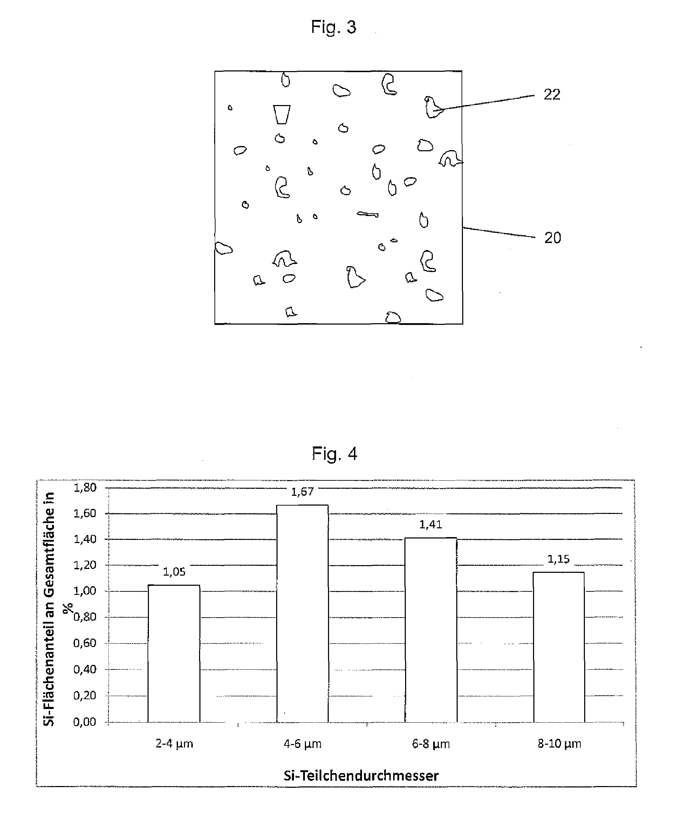

Ferner ist in Figur 1 ein Flächenausschnitt 20 symbolisch dargestellt, der vergrößert die in Figur 3 illustrierte innere Struktur aufweist. Um ein Bild eines solchen Flächenausschnittes anzufertigen, wird vorzugsweise ein ebener Schliff an geeigneter Stelle der Lagermetallschicht präpariert. Abweichend von der Darstellung in Figur 1 kann der Flächenausschnitt beispielsweise auch parallel zur Gleitfläche betrachtet werden.

Die Schichtdicke der Zwischenschicht in dem erfindungsgemäßen Gleitlagerverbundwerkstoff beträgt vorzugsweise 30 µm bis 120 µm und besonders bevorzugt 40 µm bis 100 µm.

Das zweite Ausführungsbeispiels gemäß Figur 2 weist einen dahingehend abweichenden Schichtaufbau auf, dass auf der Lagermetallschicht 10 eine Polymerbeschichtung 16 aufgebracht ist, welche insbesondere in besonders hoch beanspruchten Lageranwendungen vorteilhaft ist.

Die Erfindung ist nicht auf die beiden gezeigten Ausführungsformen beschränkt. Es ist ebenso gut möglich eine Mehrschichtanordnung mit weiteren Funktionsschichten vorzusehen. Gradientenschichten sind ebenfalls nicht ausgeschlossen. Grundsätzlich ist die Zahl und Form der Schichten daher nicht begrenzt. Vor allem aus dem eingangs erwähnten Grund der Kostenersparnis wird jedoch ein Gleitlagerverbundwerkstoff bevorzugt werden, der so wenige Schichten aufweist, wie ein sicherer Betrieb zulässt.

Anhand der Figur 3 wird im Folgenden die Methode zur Bestimmung der Si-Partikelgrößenverteilung erläutert. Nachdem zunächst ein ebener Flächenschliff von der Lagermetallschicht präpariert wurde, der beispielsweise zur Gleitfläche verläuft, wird unter einer einem Mikroskop, beispielsweise bei 500-facher Vergrößerung ein Flächenausschnitt 20 der Lagermetallschicht mit einer bestimmten Kantenlänge und -breite ausgewählt und markiert. Sei dieses beispielsweise ein Rechteck mit Kantenlängen von 500 µm und 800 µm, also der Gesamtmessfläche von 400.000 µm². In diesem Flächenausschnitt erkennt man eine Vielzahl von Si-Partikeln 22, die sich erfahrungsgemäß durch einen bestimmten Grau- oder Farbwertbereich optisch von anderen Einschlüssen, insbesondere von der Weichphase, aber auch von Fremdpartikeln, beides hier nicht dargestellt, unterscheiden lassen. Die Erfassung der Si-Partikeln erfolgt vorzugsweise automatisiert in einem elektronischen Bilderfassungssystem. Die Si-Partikeln 22 werden der Gestalt vermessen, dass ungeachtet der Form deren längste erkennbare Ausdehnung ermittelt wird. Diese Ausdehnung wird als Durchmesser bezeichnet. Ihrem Durchmesser entsprechend werden die Si-Partikel in Klassen, wie beispielsweise 2-4µm, 4-6µm, usw., eingeteilt. Die Anzahl der jeder Klasse zugeordneten Si-Partikel wird mit der der Klasse zugeordneten gemittelten Fläche, hier π*(3/2µm)², π*(5/2µm)², usw., multipliziert und die Produkte aller relevanter Klassen so erfasster Si-Partikel in dem Flächenausschnitt mit einem Durchmesser von 4 µm bis 8 µm aufaddiert und auf die Gesamtfläche des untersuchten Flächenausschnitts normiert.

Diese Verfahren auf ein Beispiel des Lagermetalls nach der Erfindung angewandt ergab das aus der folgenden Tabelle ersichtliche Resultat:

| Durchmesser, Si-Partikel µm | Korngrößenklasse, Si-Partikel µm | Gemittelte Fläche je Klasse, Si-Partikel µm² | Partikelzahl auf 400.000 µm² Gesamtmessfläche | Gesamtfläche, Si-Partikel µm² | Flächenanteil Si-Partikel an Gesamtmessfläche % |
|---|---|---|---|---|---|
| 3 | 2-4 | 7,07 | 592 | 4184,60 | 1,05 |
| 5 | 4-6 | 19,63 | 340 | 6675,88 | 1,67 |
| 7 | 6-8 | 38,48 | 147 | 5657,22 | 1,41 |
| 9 | 8-10 | 63,62 | 72 | 4580,44 | 1,15 |

Die entsprechende Verteilung ist in dem Diagramm der Figur 4 gezeigt. Entscheidend für die vorteilhaften Materialeigenschaften ist der Anteil der Si-Partikel mit einem Durchmesser von 4 µm bis 8 µm, welche erfindungsgemäß nicht weniger als 2,5%, vorzugsweise nicht weniger als 2,75% und dem gezeigten Beispiel sogar mehr als 3% der Lagermetalloberfläche einnehmen. Diese Partikelgrößenverteilung hat sich als besonders vorteilhaft herausgestellt, weil die Si-Hartteilchen ausreichend groß sind um als harte Tragkristalle eine hohe Verschleißbeständigkeit des Werkstoffes zu gewährleisten, andererseits wiederum nicht so groß, dass sie zu einer Reduzierung der Festigkeit der Matrix, insbesondere unter dynamischer Beanspruchung führen.

### Bezugszeichenliste

- 10: Lagermetallschicht
- 12: Zwischenschicht
- 14: Stahlträgerschicht
- 16: Polymerbeschichtung
- 20: Flächenausschnitt
- 22: Si-Partikel

## Patentansprüche

1. Gleitlagerverbundwerkstoff mit einer Trägerschicht aus Stahl, einer auf der Trägerschicht angeordneten Zwischenschicht und einer auf der Zwischenschicht angeordneten Lagermetallschicht aus einer bis auf Verunreinigungen bleifreien Aluminiumlegierung bestehend aus
10,5 - 14 Gew.-% Zinn,
2 - 3,5 Gew.-% Silizium,
0,4 - 0,6 Gew.-% Kupfer,
0,15 - 0,25 Gew.-% Chrom,
0,01 - 0,08 Gew.-% Strontium,
0,05 - 0,25 Gew.-% Titan und
wahlweise mindestens einem weiteren Element aus der Gruppe bestehend aus V und Zr, wobei deren Anteil insgesamt 0,05 - 0,7 Gew.-% beträgt.

2. Gleitlagerverbundwerkstoff nach Anspruch 1, **dadurch gekennzeichnet, dass** die Aluminiumlegierung der Lagermetallschicht mindestens ein weiteres Element aus der Gruppe bestehend aus V und Zr aufweist, wobei deren Anteil der Mikrolegierungselemente insgesamt 0,05 - 0,7 Gew.-% beträgt.

3. Gleitlagerschale nach Anspruch 1 oder 2, **dadurch gekennzeichnet, dass** die Zwischenschicht aus Reinaluminium oder aus einer Aluminiumlegierung besteht.

4. Gleitlagerschale nach einem der vorstehenden Ansprüche, **dadurch gekennzeichnet,**
**dass** der Anteil des Zinns in Aluminiumlegierung der Lagermetallschicht 11 - 13 Gew.-% beträgt.

5. Gleitlagerschale nach einem der vorstehenden Ansprüche, **dadurch gekennzeichnet,**
**dass** der Anteil des Siliziums in Aluminiumlegierung der Lagermetallschicht 2,25 - 2,75 Gew.-% beträgt.

6. Gleitlagerschale nach einem der vorstehenden Ansprüche, **dadurch gekennzeichnet,**
**dass** der Anteil des Titans in Aluminiumlegierung der Lagermetallschicht 0,05 - 0,15 Gew.-% beträgt.

7. Gleitlagerschale nach einem der vorstehenden Ansprüche, **dadurch gekennzeichnet,**
**dass** der Anteil des Strontiums in Aluminiumlegierung der Lagermetallschicht 0,01 - 0,05 Gew.-% beträgt.

8. Gleitlagerschale nach einem der vorstehenden Ansprüche, **dadurch gekennzeichnet,**
**dass** auf der Lagermetallschicht eine Deckschicht auf Polymerbasis angeordnet ist.

9. Gleitlagerschale nach einem der vorstehenden Ansprüche, **dadurch gekennzeichnet,**
**dass** das Silizium in Form von Partikeln in der Lagermetallschicht der Gestalt verteilt vorliegt, dass bezogen auf eine Fläche der Lagermetallschicht der Flächenanteil der in dieser Fläche sichtbaren Siliziumpartikel mit einem Durchmesser von 4 µm bis 8 µm wenigstens 2,5%, bevorzugt wenigstens 2,75% beträgt.

## Claims

1. Friction bearing composite material with a carrier layer of steel, an intermediate layer arranged on the carrier layer, and a bearing metal layer of an aluminium alloy free from lead apart from possible contamination, arranged on the intermediate layer, comprising of
10.5 to 14 wt. % tin,
2 to 3.5 wt. % silicon,
0.4 to 0.6 wt. % copper,
0.15 to 0.25 wt. % chromium,
0.01 to 0.08 wt. % strontium,
0.05 to 0.25 wt. % titanium, and
optionally at least one further element from the group consisting of V and Zr, whereby their content is 0.05 - 0.7 wt. % overall.

2. Friction bearing composite material according to claim 1, **characterized in that** the aluminium alloy of the bearing metal layer comprises at least one further element from the group consisting of V and Zr, whereby their content of the micro-alloy elements is 0.05 to 0.7 wt. % overall.

3. Friction bearing shell according to claim 1 or 2, **characterized in that** the intermediate layer consists of pure aluminium or of an aluminium alloy.

4. Friction bearing shell according to one of the preceding claims, **characterized in that** the content of tin in the aluminium alloy of the bearing metal layer is 11 - 13 wt. %.

5. Friction bearing shell according to one of the preceding claims, **characterized in that** the content of silicon in the aluminium alloy of the bearing metal layer is 2.25 to 2.75 wt. %.

6. Friction bearing shell according to one of the preceding claims, **characterized in that** the content of titanium in the aluminium alloy of the bearing metal layer is 0.05 to 0.15 wt. %.

7. Friction bearing shell according to one of the preceding claims, **characterized in that** the content of strontium in the aluminium alloy bearing metal layer is 0.01 to 0.05 wt. %.

8. Friction bearing shell according to one of the preceding claims, **characterized in that** a cover layer on a polymer basis is arranged on the bearing metal layer.

9. Friction bearing shell according to one of the preceding claims, **characterized in that** the silicon distribution is present in the form of particles in the bearing metal layer in such a way that, relative to a surface of the bearing metal layer, the surface ratio of silicon particles with a diameter of 4 µm to 8 µm visible in this area is at least 2.5 %, preferably at least 2.75 %.

## Revendications

1. Matériau composite pour paliers lisses avec une couche porteuse en acier, une couche intermédiaire disposée sur la couche porteuse et une couche métallique de palier disposée sur la couche intermédiaire en un alliage d'aluminium exempt de plomb, sauf impuretés, constitué de
10,5 à 14 % en poids d'étain,
2 à 3,5 % en poids de silicium,
0,4 à 0,6 % en poids de cuivre,
0,15 à 0,25 % en poids de chrome,
0,01 à 0,08 % en poids de strontium,
0,05 à 0,25 % en poids de titane et
au choix d'au moins un autre élément parmi le groupe constitué de V et Zr, dans lequel leur proportion se monte au total à 0,05 à 0,7 % en poids.

2. Matériau composite pour paliers lisses selon la revendication 1, **caractérisé en ce que** l'alliage d'aluminium de la couche métallique de palier présente au moins un autre élément parmi le groupe constitué de V et Zr, dans lequel la proportion des éléments de micro-alliage se monte au total à 0,05 à 0,7 % en poids.

3. Coquille de palier lisse selon la revendication 1 ou 2, **caractérisée en ce que** la couche intermédiaire se compose d'aluminium pur ou d'un alliage d'aluminium.

4. Coquille de palier lisse selon une des revendications précédentes, **caractérisée en ce**
**que** la proportion de l'étain dans l'alliage d'aluminium de la couche métallique de palier va de 11 à 13 % en poids.

5. Coquille de palier lisse selon une des revendications précédentes, **caractérisée en ce**
**que** la proportion du silicium dans l'alliage d'aluminium de la couche métallique de palier va de 2,25 à 2,75 % en poids.

6. Coquille de palier lisse selon une des revendications précédentes, **caractérisée en ce**
**que** la proportion du titane dans l'alliage d'aluminium de la couche métallique de palier va de 0,05 à 0,15 % en poids.

7. Coquille de palier lisse selon une des revendications précédentes, **caractérisée en ce**
**que** la proportion du strontium dans l'alliage d'aluminium de la couche métallique de palier va de 0,01 à 0,05 % en poids.

8. Coquille de palier lisse selon une des revendications précédentes, **caractérisée en ce**
**qu'**une couche de recouvrement à base de polymère est disposée sur la couche métallique de palier.

9. Coquille de palier lisse selon une des revendications précédentes, **caractérisée en ce**
**que** le silicium est présent sous forme de particules réparties dans la couche métallique de palier de la configuration, que la proportion superficielle des particules de silicium visibles dans une surface de la couche métallique de palier avec un diamètre de 4 µm à 8 µm se monte à au moins 2,5 %, de préférence au moins 2,75 %, par rapport à cette surface.
